# EUROPEAN PATENT APPLICATION

(11) **EP 2 560 457 A1**
(43) Date of publication of application: **20.02.2013**
(21) Application number: 11768637.8
(22) Date of filing: 14.04.2011
(51) Int. Cl.: H04W 92/08, H04Q 9/00, H04W 28/02, H04W 74/08, H04W 84/12, H04W 84/18

(54) **TERMINAL DEVICE AND METHOD FOR REGISTERING THE SAME**

(30) Priority: 14.04.2010 JP 2010093581
(71) Applicant: Panasonic Corporation, Kadoma-shi Osaka 571-8501 (JP)
(72) Inventor: BIN, Peng, Singapore 534415 (SG); KOH, Tien Ming Benjamin, Singapore 534415 (SG); TAN, Pek Yew, Singapore 534415 (SG); MATSUSHITA, Yosuke, Osaka-shi Osaka 540-6207 (JP); OHIRA, Yuki, Osaka-shi Osaka 540-6207 (JP)
(74) Representative: Kügele, Bernhard
(86) International application number: PCT/JP2011/002198
(87) International publication number: WO 2011/129115

(57) **Abstract**

A terminal apparatus includes: a transmission unit transmitting, to a master device, a first registration request indicating a request for registration as a new control target terminal; a reception unit receiving registration request acknowledgement information transmitted from the master device in response to reception of the first registration request; a notification unit notifying the outside of the terminal apparatus of notification information included in the registration request acknowledgement information and indicating the master device has received the first registration request; a detection unit detecting another terminal apparatus that is to transmit, to a master device, a second registration request indicating a request for registration as a new control target terminal; and a registration control unit controlling, when the detection unit detects the other terminal apparatus, at least a time when the first registration request is transmitted.

## Description

### [Technical Field]

The present invention relates to a terminal apparatus and a method of registering the same, and in particular to a terminal apparatus to be registered as a control target terminal in a control terminal that controls control target terminals via a communication network.

### [Background Art]

In recent years, a system has been examined in which many home electric appliances such as televisions and mobile phones are connected to a home network.

In this system, the terminal devices connected to the home network can communicate with each other, and service provided through the communication among the terminal devices can be utilized. Here, in order to realize such service utilization, it is necessary to properly register a terminal device in the home network (for example, Patent Literature 1).

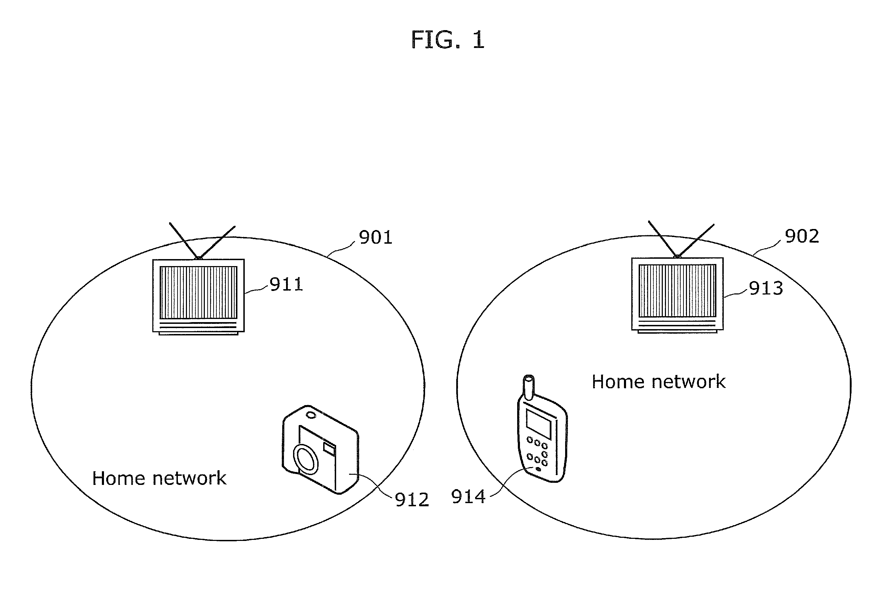

Fig. 1 shows examples of device configurations of home networks.

Fig. 1 shows a home network 901 and a home network 902 as two home networks. The home network 901 is constituted by two devices, namely, a master device 911 and a terminal device 912, and the home network 902 is constituted by two devices, namely, a master device 913 and a terminal device 914.

The master device 911 is a device (coordinator) that manages the home network 901. Specifically, the master device 911 manages storing of a list of terminal devices that constitute the home network 901 , assigning of a usable address to the home network 901 , routing of data packets between the terminal devices, distributing of security keys, and other related operations.

Similarly, the master device 913 is a master device (coordinator) that manages the home network 902. Specifically, the master device 913 manages storing of a list of terminal devices that constitute the home network 902, assigning of a usable address to the home network 902, routing of data packets between the terminal devices, distributing of security keys, and other related operations.

The terminal device 912 is a normal node in the home network 901, and the terminal device 914 is a normal node in the home network 902.

Here, assuming that the terminal device 912 is a device that newly joins the home network 901, the operation until the device joins the home network 901 will be described.

First, the terminal device 912 detects the master device 911 that manages the home network 901, in order to newly join the home network 901.

Next, the terminal device 912 registers the terminal device 912 itself in the master device 911. Thus, the terminal device 912 can newly join the home network 901.

Here, it is assumed that the master device 911 and the terminal device 912 do not have configuration information prepared in advance for identifying each other before registration. In that case, after determining whether or not the master device 911 and the terminal device 91 2 form a proper pair, the terminal device 91 2 is registered.

Specifically, the master device 911 and the terminal device 912 notify a user whether or not the devices form a proper pair using an audio or visual signal indication for identifying each other, and the terminal device 91 2 is registered after user determination. Thus, the terminal device 912 can newly join the home network 901 managed by the master device 911.

An example of a signal indication is a method in which both the master device 911 and the terminal device 912 that are to form a pair reproduce the same audio file, or turn on respective LED lights, or the like.

In this way, for example, when device registration is performed in the home network 901, for identification of the terminal device 912 and the master device 911 that are to form a pair, the devices notify the user whether or not the devices form a proper pair using an audio or visual signal indication.

### [Citation List]

### [Patent Literature]

[PTL 1] Japanese Patent No. 3704106

### [Summary of Invention]

### [Technical Problem]

However, a problem as will be described below may arise when a plurality of terminal devices and a plurality of master devices perform device registration at the same time.

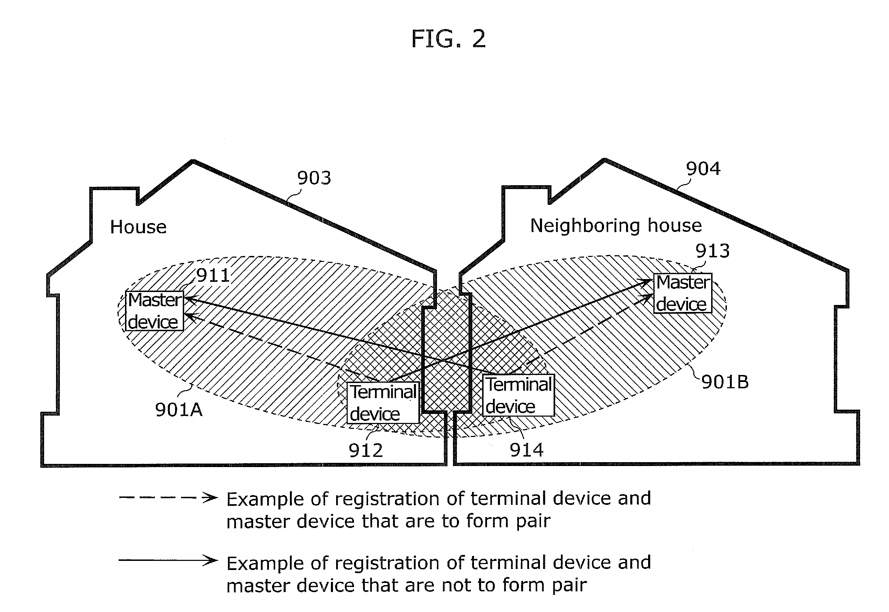

Fig. 2 illustrates a problem in the conventional device registration. A house 903 and a neighboring house 904 that are shown in Fig. 2 respectively have a home network 901A and a home network 901 B each constituted by wireless communication. The house 903 has the master device 911 and the terminal device 912, and the neighboring house 904 has the master device 913 and the terminal device 91 4.

As shown in Fig. 2, the range of the home network 901A and that of the home network 901 B may overlap in adjoining houses, the networks being constituted by wireless communication. Specifically, for example, when only one device is registered in the home network 901A, no problems will arise even if an audio or visual signal indication is used in order to identify the terminal device 91 2 and the master device 911 that are to form a pair. However, as shown in Fig. 2, there is a case where a plurality of terminal devices (the terminal device 912 and the terminal device 914) and a plurality of master devices (the master device 911 and the master device 913) perform device registration at the same time. In that case, there is a problem that if the terminal devices (the terminal device 912 and the terminal device 914) and the master devices (the master device 911 and the master device 913) use the same signal indication, it is not possible to determine whether a terminal device and a master device form a proper pair.

In other words, for example, even if the pair of the master device 911 and the terminal device 912 and the pair of the master device 913 and the terminal device 912 respectively notify a user in the house 903 and a user in the neighboring house 904 of a signal indication for device registration, the same signal indication is used by the terminal devices and the master devices, and thus the users in the house 903 and the neighboring house 904 cannot determine whether the pair of a terminal device and a master device is a proper pair. As a result, there is a problem that a terminal device may be registered in a master device with which the terminal device is not to form a pair.

The present invention has been conceived in order to solve the above problems, and an object thereof is to provide a terminal apparatus capable of preventing from being registered in a control device in which the terminal device is not to be registered, a communication method therefor, and a system.

### [Solution to Problem]

In order to achieve the above object, a terminal apparatus according to an aspect of the present invention is a terminal apparatus that is to be registered, as a new control target terminal, in a first control apparatus that controls a control target terminal via a communication network, the terminal apparatus including: a transmission unit configured to transmit, to the first control apparatus, a first registration request that indicates a request for registration as a new control target terminal; a reception unit configured to receive registration request acknowledgement information transmitted from the first control apparatus in response to reception of the first registration request; a notification unit configured to notify outside of the terminal apparatus of notification information that is included in the registration request acknowledgement information and that indicates that the first control apparatus has received the first registration request; a detection unit configured to detect another terminal apparatus that is to transmit, to at least a second control apparatus that is different from the first control apparatus, a second registration request that indicates a request for registration as a new control target terminal; and a registration control unit configured to control, when the detection unit detects the other terminal apparatus before the transmission unit transmits the registration request to the first control apparatus, at least one of a time at which the first registration request is transmitted and a time at which the second registration request is transmitted so as to prevent overlapping of a period in which the first registration request is transmitted and a period in which the second registration request is transmitted.

According to the aspect of the present invention, when another terminal apparatus is detected prior to transmitting a registration request, the time at which the first registration request is transmitted and the time at which the second registration request is transmitted are controlled so as to prevent overlapping of the period in which the terminal apparatus itself transmits the first registration request and the period in which the other terminal apparatus transmits the second registration request.

Accordingly, the registration requests are sequentially transmitted from the terminals to the first and second control devices, and thus it is possible to determine whether or not the registration requests transmitted from the terminals to the first and second control devices are each transmitted to a control device in which the terminal is to be registered. As a result, incorrect authentication can be prevented from occurring between the terminals and the first and second control terminals.

### [Advantageous Effects of Invention]

According to the present invention, it is possible to realize a terminal apparatus capable of preventing from being registered in a control device in which the terminal apparatus is not to be registered, a communication method therefor, and a system.

### [Brief Description of Drawings]

[Fig. 1] Fig. 1 shows examples of device configurations of conventional home networks.
[Fig. 2] Fig. 2 illustrates a problem in conventional device registration.
[Fig. 3] Fig. 3 shows examples of device configurations of home networks according to an embodiment of the present invention.
[Fig. 4] Fig. 4 is a functional block diagram of a terminal device according to the embodiment of the present invention.
[Fig. 5] Fig. 5 is a functional block diagram of a master device according to the embodiment of the present invention.
[Fig. 6] Fig. 6 is a flowchart for describing processing for registering a terminal device to be newly connected to a home network.
[Fig. 7] Fig. 7 is a flowchart showing an example of registration processing different from that in Fig. 6.
[Fig. 8] Fig. 8 shows a message format included in a registration request message and a registration request acknowledgement message.
[Fig. 9] Fig. 9 shows a message format included in a registration start accept message and a registration start reject message.
[Fig. 10] Fig. 10 shows a message format included in a registration start delay message.
[Fig. 11] Fig. 11 is a flowchart for describing registration processing performed by a master device to register a new terminal device that is to join a home network.
[Fig. 12] Fig. 12 is a flowchart for describing the details of registration procedure processing performed by the master device.
[Fig. 13] Fig. 13 is a flowchart for describing the details of processing of S401.
[Fig. 14A] Fig. 14A shows the relationship among a master device 1 1 , a terminal device 12 that is a new terminal device, and another new terminal device 14 in the processing of S401.
[Fig. 14B] Fig. 14B shows the relationship among the master device 1 1 , the terminal device 12 that is the new terminal device, and the other new terminal device 14 in the processing of S401.
[Fig. 15] Fig. 15 shows functional blocks of the minimum configuration of the terminal apparatus according to the present invention.

### [Description of Embodiments]

A terminal apparatus according to an aspect of the present invention is a terminal apparatus that is to be registered, as a new control target term inal, in a first control apparatus that controls a control target terminal via a communication network, the terminal apparatus including: a transmission unit configured to transmit, to the first control apparatus, a first registration request that indicates a request for registration as a new control target terminal; a reception unit configured to receive registration request acknowledgement information transmitted from the first control apparatus in response to reception of the first registration request; a notification unit configured to notify outside of the terminal apparatus of notification information that is included in the registration request acknowledgement information and that indicates that the first control apparatus has received the first registration request; a detection unit configured to detect another terminal apparatus that is to transmit, to at least a second control apparatus that is different from the first control apparatus, a second registration request that indicates a request for registration as a new control target terminal; and a registration control unit configured to control, when the detection unit detects the other terminal apparatus before the transmission unit transmits the registration request to the first control apparatus, at least one of a time at which the first registration request is transmitted and a time at which the second registration request is transmitted so as to prevent overlapping of a period in which the first registration request is transmitted and a period in which the second registration request is transmitted.

According to this aspect of the present invention, when the other terminal apparatus is detected prior to transmitting the registration request, the time at which the first registration request is transmitted and the time at which the second registration request is transmitted are controlled so as to prevent overlapping of a period in which the terminal apparatus itself transmits the first registration request and a period in which the other terminal apparatus transmits the second registration request.

Accordingly, registration requests are sequentially transmitted from the terminal apparatuses to the first and second control term inals, and thus it can be determined whether or not the registration requests transmitted from the terminals to the first and second control terminals are each transmitted to a control apparatus that is to register the terminal apparatus. As a result, incorrect authentication can be prevented from occurring between the first control apparatus and the term inal apparatus itself.

Further, when a destination of the second registration request is the first control apparatus, the registration control unit may be configured to allow the overlapping of the period in which the second registration request is transmitted and the period in which the first registration request is transmitted, and control one of the time at which the first registration request is transmitted and the time at which the second registration request is transmitted.

For example, both the first control apparatus and the terminal apparatus notify (by audio notice or color lighting) a user of registration completion information indicating that registration processing is completed in response to the reception of the first registration request, thereby enabling the user to determine whether or not the terminal apparatus has been properly registered in the first control apparatus.

If the terminal apparatus and the other terminal apparatus each transmit a registration request at the same time to a different control apparatus, namely the first or second control apparatus, even when the first control apparatus and the second control apparatus are not the control devices in which the terminal apparatus and the other terminal apparatus are to be respectively registered, the terminal apparatus, the other terminal apparatus, the first control apparatus, and the second control apparatus will notify respective users of completion of registration processing. Accordingly, the term inal apparatus, the other term inal apparatus, the first control apparatus, and the second control apparatus will respectively notify the users of the above completion information at the same time. In this case, even if each terminal apparatus is incorrectly registered in the first control apparatus or the second control apparatus, the users of the term inal apparatus and the other terminal apparatus may not notice such incorrect registration.

On the other hand, when the terminal apparatus and the other terminal apparatus transmit a registration request to the same first control apparatus, even if the other terminal apparatus notifies the user of the above completion notification, the user of the other terminal apparatus can recognize that the other terminal apparatus is not properly registered in the second control apparatus in which that terminal apparatus is to be registered, since the second control apparatus does not notify the user of the above completion information.

For such a reason, according the aspect of the present invention, although the time at which the registration request is transmitted is controlled in the case where the destination of the second registration request is the second control apparatus, when the destination of the second registration request is the first control apparatus, the overlapping of registration processing is allowed even if the period in which the registration request is transmitted overlaps.

Accordingly, when the terminal apparatus and the other terminal apparatus each transmit the registration request to a different destination, registration requests are sequentially transmitted from the terminal apparatus and the other terminal apparatus, and thus it is possible to determine whether or not the registration requests transmitted from the terminal devices to the first and second control apparatuses are each transmitted to a control apparatus in which the terminal device is to be registered. As a result, it is possible to prevent each terminal apparatus from being registered in a control apparatus in which that terminal apparatus is not to be registered.

Further, when the detection unit detects the other terminal apparatus, the registration control unit may be configured to determine a registration processing order in relation to the other terminal apparatus, and cause transmission of the first registration request to the first control apparatus in accordance with the determined registration processing order, the registration processing order indicating which of the time at which the first registration request is transmitted and the time at which the second registration request is transmitted comes earlier.

Further, after transmitting a check message for detecting whether or not the other terminal apparatus exists on the communication network, the detection unit may be configured to detect the other terminal apparatus by receiving, from the other terminal apparatus, a response message indicating that the other terminal apparatus has received the check message.

Further, the check message may include information on a waiting time for causing the other terminal apparatus to wait to transmit the second registration request, and when receiving the check message, the other terminal apparatus may transmit the second registration request to one of the first control apparatus and the second control apparatus after the waiting time elapses.

Further, the detection unit may be configured to detect the other terminal apparatus by receiving a check message for the other terminal apparatus detecting whether or not the terminal apparatus exists on the communication network.

Further, the check message may include information on a waiting time for causing the terminal apparatus to wait to transmit the first registration request, and when the detection unit receives the check message, the registration control unit may be configured to cause the transmission unit to transmit the first registration request after the waiting time elapses.

Further, when the detection unit detects that the second registration request has been transmitted from the other terminal apparatus, the registration control unit may be configured to cause the transmission unit to transmit the first registration request to the first control apparatus after a random time elapses.

Further, the detection unit may be further configured to detect whether or not the second control apparatus that is different from the first control apparatus exists on the communication network, the transmission unit may be configured to transmit, also to the second control apparatus, the first registration request that indicates the request for registration as a new control target terminal, and the registration control unit may be configured to determine, when the detection unit detects that the second control apparatus exists, a control apparatus order that indicates to which of the first control apparatus and the second control apparatus the first registration request is transmitted earlier, and cause the transmission unit to transmit the first registration request in accordance with the determined control apparatus order.

Further, when the terminal apparatus is registered in one of the first control apparatus and the second control apparatus, the registration control unit may be configured to stop transmitting the first registration request to the other one of the first and second control apparatuses.

Further, a control apparatus according to an aspect of the present invention is a control apparatus that controls a control target terminal via a communication network, the control apparatus including: a reception unit configured to receive, from a terminal apparatus, a first registration request that indicates a request for registration as a new control target terminal; a transmission unit configured to transmit, to the terminal apparatus, registration request acknowledgement information that includes notification information indicating that the control apparatus has received the first registration request, in response to the reception of the first registration request; a detection unit configured to detect another terminal apparatus that is different from the terminal apparatus and that is to transmit, to at least another control apparatus different from the control apparatus, a second registration request that indicates a request for registration as a new control target terminal; and a registration control unit configured to control at least a time at which the first registration request is transmitted so as to prevent overlapping of a period in which the first registration request is transmitted and a period in which the second registration request is transmitted, when the detection unit detects the terminal apparatus and the other terminal apparatus.

It should be noted that the present invention can be realized, not only as an apparatus, but also as an integrated circuit including processing means that such an apparatus includes, a method having, as steps, the processing means that constitute the apparatus, a program that causes a computer to execute those steps, or information, data, or a signal that indicates the program. In addition, such a program, information, data, and a signal may be distributed via a recording medium such as a CD-ROM and via a communication medium such as the Internet.

The following is a description of an embodiment of the invention using the drawings, specific numerical values, times, structures, and protocols, and other parameters. It should be noted that the present invention is not limited to the specific numerical values, times, structures, protocols, and other parameters used in the description. The scope of the present invention also encompasses what is apparent to those skilled in the art, even without specific details.

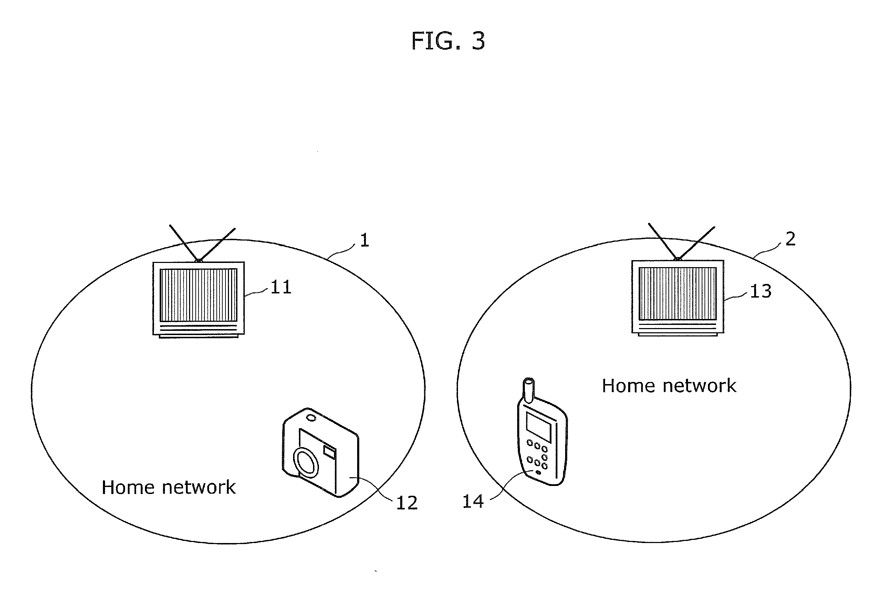

Fig. 3 shows examples of device configurations of networks in the embodiment of the present invention. Fig. 3 shows a home network 1 and a home network 2 as two home networks. The home network 1 is constituted by two devices, namely, a master device 11 and a terminal device 12, and the home network 2 is constituted by two devices, namely, a master device 13 and a terminal device 14.

The master device 11 is a device (coordinator) that manages the home network 1. Specifically, the master device 11 manages storing of a list of terminal devices that constitute the home network 1 , assigning of a usable address to the home network 1 , routing of data packets between terminal devices, distributing of security keys, and other related operations. Similarly, the master device 13 is a master device (coordinator) that manages the home network 2. Specifically, the master device 13 manages storing of a list of terminal devices that constitute the home network 2, assigning of a usable address to the home network 2, routing of data packets between terminal devices, distributing of security keys, and other related operations.

The terminal device 12 is a normal node in the home network 1, and the terminal device 14 is a normal node in the home network 2.

### <Functional blocks of terminal device>

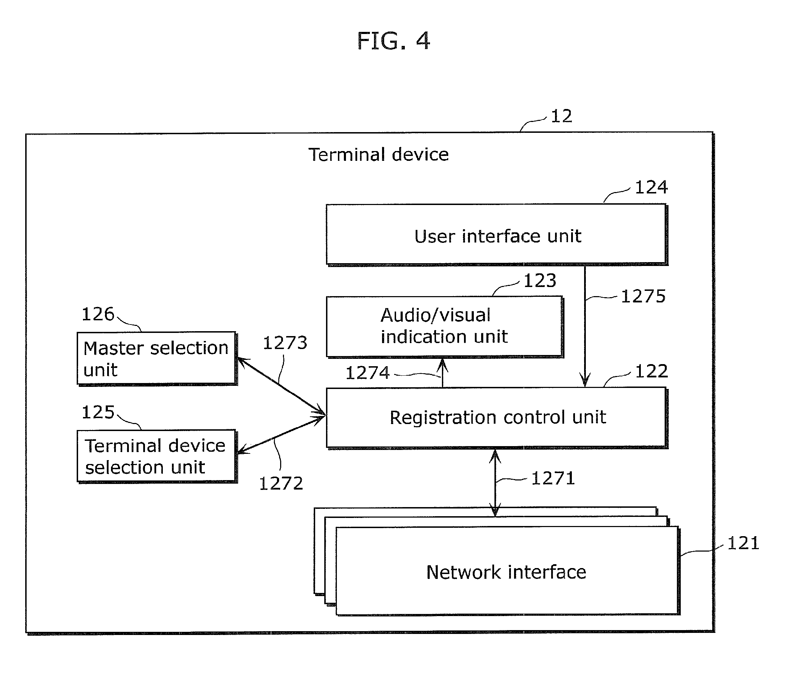

Fig. 4 is a functional block diagram of a terminal device in the embodiment of the present invention. The terminal device 12 shown in Fig. 4 is a terminal apparatus to be registered, as a new control target terminal, in a master device that controls a control target terminal via a communication network.

The term inal device 1 2 includes a network interface 1 21 , a registration control unit 122, an audio/visual indication unit 123, a user interface unit 124, a terminal device selection unit 125, and a master device selection unit 126.

The network interface 121 is a medium-designated access card for transmitting and receiving a message.

The registration control unit 122 corresponds to a transmission unit, a reception unit, a notification unit, a detection unit, and a registration control unit of the present invention. The registration control unit 122 transmits, to a master device, a first registration request message indicating a request for registration as a new control target terminal.

Further, the registration control unit 122 receives a registration request acknowledgement message transmitted from the master device in response to the reception of the first registration request message, and notifies the outside of the terminal device 12 of notification information included in the registration request acknowledgement message and indicating that the master device has received the first registration request message.

Further, the registration control unit 122 detects the terminal device 14 that is another terminal device and is to transmit, to the master device or a master device different from the master device, a second registration request message indicating a request for registration as a new control target terminal.

When the registration control unit 122 detects the other terminal device 14 before transmitting the first registration request message to the target master device, the registration control unit 122 controls at least the time at which the terminal device 12 transmits the first registration request message so as to prevent overlapping of the period in which the terminal device 12 transmits the first registration request message and the period in which the other terminal device 14 transmits the second registration request message.

More specifically, the registration control unit 122 analyzes a message with regard to registration of the terminal device 12 itself received from the network interface 121 via a path 1271. When another terminal device (e.g., the terminal device 14) is detected in the home network 1, the registration control unit 122 notifies the terminal device selection unit 125 of the detection thereof. When the terminal device 12 detects an available master device, the registration control unit 122 notifies the master device selection unit 126 of the detection thereof.

Further, the registration control unit 122 transmits the registration request message for requesting registration of the terminal device 12 in accordance with the order of transmission times determined by the terminal device selection unit 125 and the master device selection unit 126.

Further, upon receiving the registration request acknowledgement message, the registration control unit 122 notifies, via a path 1274, the audio/visual indication unit 123 to reproduce an audio or visual signal as an audio or visual signal indication for identifying each other.

Upon receiving a registration accept message from the user interface unit 124 via a path 1275, the registration control unit 122 transmits the registration accept message to the master device. Then, when the registration accept message is received from the master device, the registration control unit 122 starts registration processing. On the other hand, when a registration start reject message is received from the master device, the registration control unit 122 transmits a registration request message to another master device.

The audio/visual indication unit 123 is a unit capable of reproducing a plurality of different signals. Such different signals may be composed of a series of different audio or visible elements, or by both audio and visible elements.

The user interface unit 124 receives an instruction as to whether or not to accept or reject registration of the terminal device 12 itself in the master device due to a slight user operation, and notifies the registration control unit 122 of that instruction via a path 1275, as a registration accept message.

It should be noted that such a slight user operation includes the followings: the approval of a next operation (registration processing) based on a registration request acknowledgement message from a master device that is desired to pair with the terminal device 12; and the rejection of a next operation (registration processing) based on a registration request acknowledgement message from a master device that is desired to pair with that terminal device. The user interface unit 124 notifies the registration control unit 122 of the above operation via the path 1275, as a registration start accept/reject message.

The terminal device selection unit 125 determines when in the order the terminal device 12 itself starts registration, and starts a registration procedure.

The master device selection unit 126 determines the order of master devices to which the terminal device 12 itself transmits a registration request message based on the notification received from the registration control unit 122.

The terminal device 12 has a configuration as described above.

It should be noted that the registration control unit 122 detects the destination included in a second registration request message that the terminal device 14 is to transmit, and that indicates that the terminal device 14 requests registration thereof as a new control target terminal.

When the detected destination is the master device 13, the registration control unit 122 controls the time at which the second registration request message is transmitted, in addition to the time at which the first registration request message is transmitted. On the other hand, when the detected destination is the above first control apparatus, the registration control unit 122 may allow overlapping of a period in which the second registration request is transmitted and a period in which the first registration request is transmitted, or may control the time at which the first or second registration request is transmitted.

This configuration is included in the present embodiment for the following reasons.

For example, in response to the reception of the first registration request, both the first control apparatus and the terminal apparatus notify (by audio notice or color lighting) a user of registration completion information indicating that registration processing is completed, thereby enabling the user to determine whether or not that terminal apparatus is properly registered in the first control apparatus.

Also, in cases other than the case where registration completion information is notified after completion of registration processing, the user of the term inal apparatus can determ ine whether or not that apparatus is to be registered in a proper control apparatus by notification of registration start information before the start of registration processing. Then, the user starts registration processing if that apparatus is a proper terminal apparatus, and he/she can stop registration processing if that apparatus is not a proper terminal apparatus.

If the terminal apparatus and the other terminal apparatus each transmit a registration request at the same time to a different control apparatus, namely the first or second control apparatus, even when the first control apparatus and the second control apparatus are not the control devices in which the terminal apparatus and the other terminal apparatus are to be respectively registered, the terminal apparatus, the other terminal apparatus, the first control apparatus, and the second control apparatus will notify respective users of completion of registration processing. Accordingly, the term inal apparatus, the other term inal apparatus, the first control apparatus, and the second control apparatus will notify the respective users of the above completion information or the above registration start information at the same time.

In this case, even if each terminal apparatus is incorrectly registered in the first control apparatus or the second control apparatus, the users of the term inal apparatus and the other terminal apparatus may not notice such incorrect registration.

On the other hand, when the terminal apparatus and the other terminal apparatus transmit a registration request to the same first control apparatus, even if the other terminal apparatus notifies the user of the above completion notification, the user of the other terminal apparatus can recognize that the other terminal apparatus is not properly registered in the second control apparatus in which that apparatus is to be registered, since the second control apparatus does not notify the user of the above completion information.

Accordingly, the terminal apparatus and the other terminal apparatus each transmit a registration request to a different destination, the registration requests therefrom are transmitted sequentially, and thus it is possible to prevent the other communication apparatus, the first control apparatus, and the second control apparatus from notifying the users of the above registration start information or the above completion information at the same time. As a result, it is possible to reliably prevent each terminal apparatus from being registered in a control apparatus in which the terminal apparatus is not to be registered.

It should be noted that the terminal device 14 has the same configuration as that of the terminal device 12, and thus a description thereof is omitted.

### < Master device functional block>

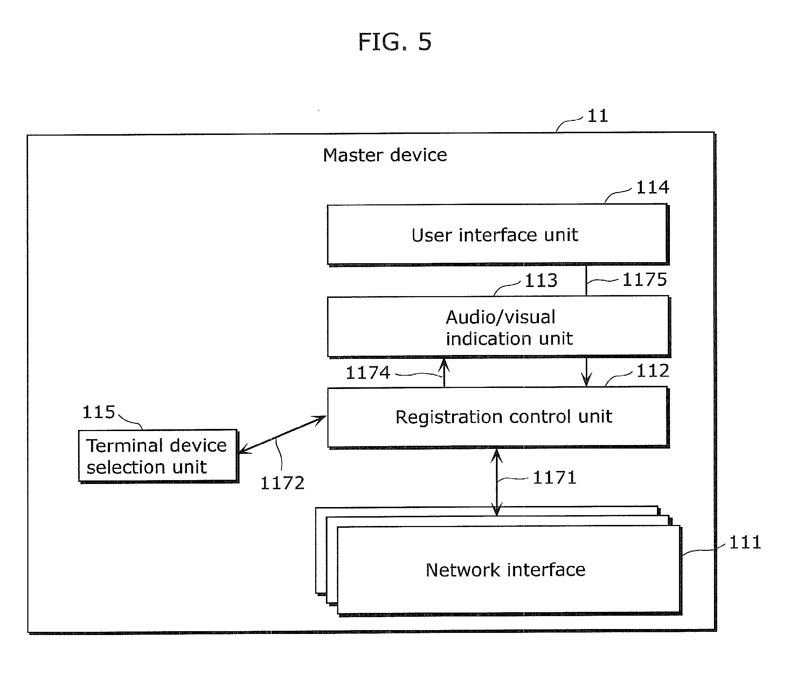

Fig. 5 is a functional block diagram of the master device in the embodiment of the present invention. The master device 11 shown in Fig. 5 is a control apparatus that controls a control target terminal via a communication network, and includes a network interface 111, a registration control unit 112, an audio/visual indication unit 113, a user interface unit 114, and a terminal device selection unit 115.

The registration control unit 112 corresponds to a transmission unit, a reception unit, a detection unit, and a registration control unit of the present invention. The registration control unit 112 receives, from a terminal apparatus (e.g., the terminal device 12), the first registration request message indicating a request for registration as a new control target terminal.

Further, in response to the reception of the first registration request message, the registration control unit 112 transmits, to the terminal apparatus (the terminal device 12), the registration request acknowledgement information that includes notification information indicating that the master device 11 has received the first registration request message.

Further, the registration control unit 112 detects another terminal apparatus (e.g., the terminal device 14) that is different from the terminal apparatus (the terminal device 1 2) and that is to transmit, to at least another control apparatus (e.g., the master device 13) different from the master device 1 1 , the second registration request message indicating a request for registration as a new control target term inal.

When the registration control unit 112 detects the terminal apparatus (the terminal device 12) and the other terminal apparatus (the terminal device 14), the registration control unit 112 controls at least a time to respond to the first registration request message transmitted by the terminal apparatus (the terminal device 12) so as to prevent overlapping of the period in which the first registration request message is transmitted and the period in which the second registration request message is transmitted.

Specifically, upon receiving a registration request message from the network interface 111 via a path 1171, the registration control unit 112 checks whether or not there are a plurality of new terminal devices that are executing registration processing. When there are such terminal devices, the registration control unit 112 notifies, via a path 1172, the terminal device selection unit 115 to determine the order of new terminal devices for which registration processing is to be executed.

Further, the registration control unit 112 selects one terminal device from among the new terminal devices that are executing registration processing in accordance with the determination result received from the terminal device selection unit 115, and transmits a registration request acknowledgement message to the selected terminal device via the network interface 1 1 1 , in response.

The registration control unit 112 notifies the audio/visual indication unit 113 to reproduce an audio or visual signal as an audio or visual signal indication for identifying each other via a path 1174.

Further, upon receiving a registration start accept/reject message from the user interface unit 114 via a path 1175, the registration control unit 112 transfers the registration start accept/reject message to the network interface 121 of the terminal device to which the registration request acknowledgement message has already been transmitted.

If the terminal device selection unit 115 is notified, by the registration control unit 112, to determine the order of terminal devices for which registration processing is to be executed, the terminal device selection unit 115 determines the order, and thereafter transmits the determination result to the registration control unit 112 via a path 1172.

The user interface unit 114 receives, from the user, an instruction to accept or reject the registration start request transmitted from a terminal device, and notifies the registration control unit 112 of that user instruction via the path 1175.

The master device 11 has a configuration as described above.

It should be noted that the master device 13 has the same configuration as that of the master device 11, and thus a description thereof is omitted.

Next is a description of the operation of the terminal device 12.

### <Registration processing performed by terminal device>

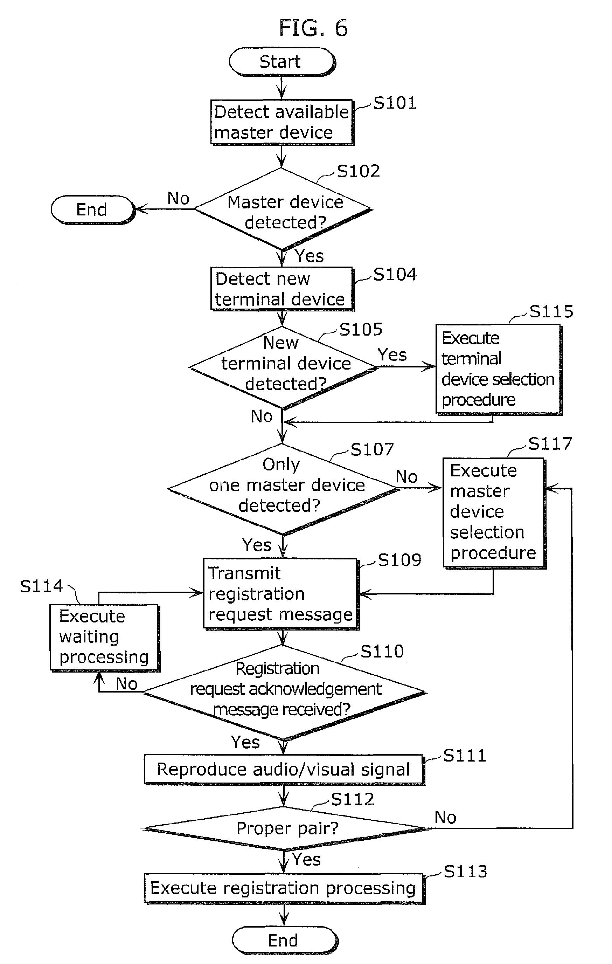

Fig. 6 is a flowchart for describing registration processing performed by a terminal device that is newly connected to a home network. The following is a description using the case where the terminal device 12 newly joins the home network 1, and performs registration processing as an example. Further, the home networks 1 and 2 are each assumed to be a wireless-communication network, and include the terminal devices 12 and 14, as shown in Fig. 2.

First, in order to newly join the home network 1, the terminal device 12 detects master devices in which the terminal device 12 may be registered as a new control target terminal in the environment where the terminal device 12 exists (S101). Specifically, the home network 1 and the home network 2 are in that environment, and the terminal device 12 cannot distinguish between the networks. Accordingly, the terminal device 12 will detect the master device 11 that manages the home network 1, and the master device 13 that manages the home network 2.

Next, the terminal device 12 checks whether or not a master device has been detected (S102). Here, when the terminal device 12 does not detect master devices (the master device 11 and the master device 13) (No in S1 02), registration processing is stopped.

On the other hand, when the terminal device 12 detects a master device (Yes in S1 02), the terminal device 12 detects whether or not there is another terminal device that is to be newly connected to that environment (described as a new terminal device in the diagram) (S104).

When another new terminal device (e.g., the terminal device 14) is detected (Yes in S105), the terminal device 12 executes a terminal device selection procedure, in order to determine the order of terminal devices that are to start registration processing (S115).

On the other hand, when another new terminal device (the terminal device 14) is not detected (No in S105), the terminal device 12 checks whether there is only one master device in that environment (S107).

When a plurality of master devices are detected in the environment (No in S107), the terminal device 12 executes master device selection procedure processing using the master device selection unit 126, and determines the order of master devices that may each be a destination to which the terminal device 12 itself transmits a registration request message (i.e., where the terminal device is to be registered) (S117). Then, the registration request message is transmitted to the master device (e.g., the master device 11) selected by the master device selection unit 126 (S109). It should be noted that when there is only one master device in the environment (Yes in S107), the terminal device 12 selects that master device (e.g., the master device 11), and transmits the registration request message to the selected master device 11 (S109).

Here, when transmitting the registration request message to the selected master device 11, the terminal device 12 sets a timer (a time limit) for waiting for a registration request acknowledgement message to be transmitted from the master device 11 in response. It should be noted that this timer may have a count value set therein that monotonically decreases, and use the time limit as a time that ends when the count value reaches 0 after decreasing at fixed intervals, or the timer may be managed using the actual time.

Next, before the set timer (time limit) expires, the terminal device 12 checks whether or not the registration request acknowledgement message has been received from the master device 11 (S110). It should be noted that if the set timer (time limit) expires without receiving the registration request acknowledgement message from the master device 11 (No in S110), the terminal device 12 transmits the registration request message to the master device 11 again (S114). It should be noted that also when a registration start delay message is received, not a registration request acknowledgement message (No in S110), the terminal device 12 transmits the registration request message to the master device 11 again after a waiting time included in the registration start delay message elapses (S114).

On the other hand, when the registration request acknowledgement message is received from the master device 11 (Yes in S110), the terminal device 12 reproduces the signal indication (e.g., audio/visual signal) designated in the received registration request acknowledgement message (S111), and prompts the user to determine whether or not the terminal device 12 and the master device 11 are forming a proper pair. Further, the terminal device 12 sets a timer for waiting for a user operation in the terminal device 12 itself.

It should be noted that when the received registration request acknowledgement message does not designate a signal, the terminal device 12 may reproduce default signal indication of the terminal device 12 itself.

Next, the user determines whether or not the terminal device and the master device that are reproducing signal indication (e.g., audio/visual signal) are forming a proper pair (S112). Specifically, the user checks whether the terminal device 12 and the master device 11 in the home network 1 are reproducing signal indication.

If the terminal device 12 and the master device 11 are reproducing the same signal (Yes in S112), the user determines that the pair is a proper pair, and instructs, via the user interface unit 1 24, the terminal device 12 to transmit a registration accept message to the master device 11. Then, the terminal device 12 receives a registration accept message from the master device 11, and starts registration processing (S113).

On the other hand, the user determines in S112 that the terminal device 12 and the master device 11 do not form a proper pair in the home network 1 when the terminal device 12 and the master device 11 are not reproducing the same signal (No in S112).

Then, the user instructs, via the user interface unit 124, the terminal device 12 to transmit a registration start reject message to the master device 11. Upon receiving the instruction from the user, the registration control unit 122 transmits a registration start reject message to the master device 11.

Next, the terminal device 12 executes a master device selection procedure (S117), and selects the next master device different from the master device 11. Based on the result of the master device selection procedure, the terminal device 12 performs processing of S109 to S112 again with respect to the selected master device.

Then, the terminal device 12 performs registration processing until one of registration processes is successful, or until all the registration processes for registration in master devices in which the terminal device may be newly registered as a control target terminal fail, and thereafter ends registration processing.

The terminal device performs registration processing as described above.

It should be noted that although the above is a description assuming that the user determines that a pair (the terminal device 12 and the master device 11) in the home network 1 is a proper pair, and thereafter the terminal device 12 executes registration processing, the present invention is not limited to this. For example, a determination may be made as to whether registration processing has succeeded after the start of registration processing.

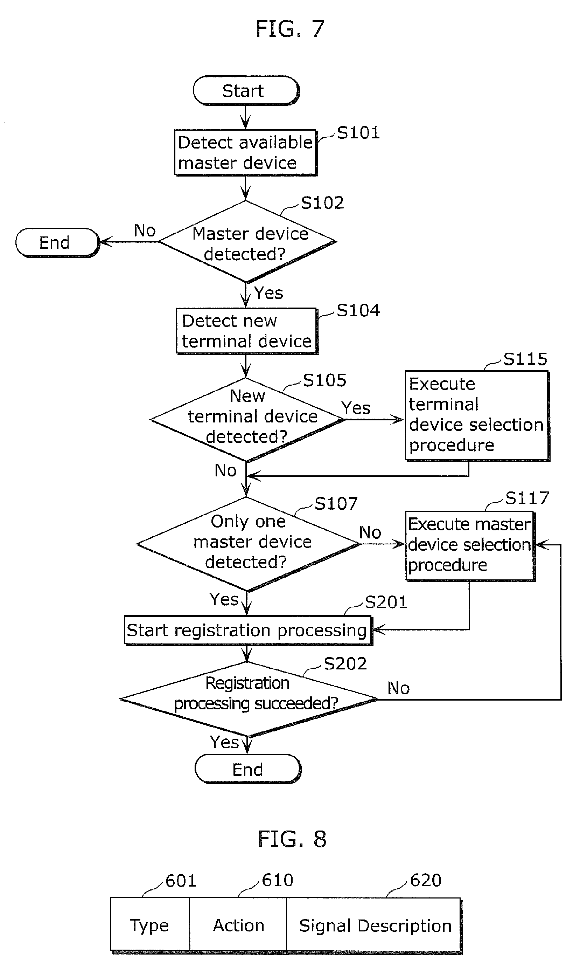

Fig. 7 is a flowchart showing an example of registration processing different from that in Fig. 6. It should be noted that the same numerals are given to the same elements as those in Fig. 6, and a detailed description thereof is omitted.

As shown in Fig. 7, after performing processing of S1 07 or S117, the terminal device 12 starts registration processing by transmitting a registration request message to a master device (e.g., the master device 11) (S201).

Next, the terminal device 12 determines whether registration processing has succeeded (S202). Specifically, the terminal device 12 determines whether registration processing has succeeded by performing processing of S110 to S112 and S114 described above, and determines that registration processing has succeeded in the case of "Yes" in the processing shown in S112.

### < Master detection procedure for terminal device>

Next is a detailed description of a master device detection procedure performed by the terminal device 12 in S101. In other words, a procedure for detecting a master device in which the terminal device 12 may be registered as a new control target terminal in the environment will be described in detail.

In order to join the home network 1, the terminal device 12 broadcasts a message for detecting whether or not a master device exists in the environment where the terminal device 12 exists. Specifically, the terminal device 12 broadcasts the message in the home network 1 and the home network 2, and sets the timer for waiting for a response. Here, the broadcast message that is a message transmitted through broadcasting may be a kind of a beacon request message.

Next, both the master device 11 and the master device 13 exist in an area where the above message from the terminal device 12 can be received, and thus the master devices transmit a unicast response message to the terminal device 12 in response, before the timer (time limit) of the terminal device 12 expires. Here, this unicast response message may also be a kind of a beacon message.

In this manner, the terminal device 12 detects the master device 11 and the master device 13 by receiving the unicast response messages from the master device 11 and the master device 13.

It should be noted that the terminal device 12 stops a master detection procedure when a response message is not received before the set timer (time limit) expires.

In the manner as described above, the terminal device 12 detects a master device in which the terminal device may be registered as a new control target terminal in the environment.

It should be noted that a method of detecting a master device in which the terminal device 12 may be registered as a new control target terminal in the environment is not limited to the above example. For example, a master device may broadcast a message periodically.

In that case, the terminal device 12 checks whether the message broadcast by the master device 11 is to be received, when joining the home network 1.

Here, the timer (time limit) is set in the terminal device 12. The timer (time limit) may be set so as to be longer than the interval of messages broadcast by a master device. When the set timer expires, the terminal device 12 checks whether the broadcast message has been received. It is assumed that the master device 11 is detected if the message has been received, and otherwise, the master device 11 is not detected.

### < Procedure for detecting new terminal device and device selection procedure>

The following is a detailed description of a procedure for detecting the new terminal device 12 performed by the terminal device 12 in S104, or in other words, a procedure for the terminal device 12 to detect whether there is another terminal device that is to be newly connected in the environment.

First, the terminal device 12 transmits a check message through broadcasting in order to detect another new terminal device in the environment, or in other words, in the home network 1 and the home network 2.

Here, this check message includes a request to the terminal device 14 that is another new terminal device in the reception area for a response indicating that this check message has been received, and a request thereto to set a timer for waiting to transmit a registration start message. It should be noted that although this check message is similar to the broadcast message used for the detection of a master device described above, the check message differs in that specific information for identifying the message being used for detection of the terminal device 14 (another new terminal device) different from the terminal device 12 is included.

Next, the terminal device 14 transmits a response message in response to the check message received from the terminal device 12. Accordingly, the terminal device 12 can detect the terminal device 14 that is another new terminal device. It should be noted that the terminal device 14 does not need to respond to the check message when the timer for waiting to transmit a registration start message is set according to the request in the acknowledgement message received from the terminal device 12.

Next, the terminal device 12 detects that the terminal device 14 (another new terminal device) is in the environment, and thereafter checks whether a network transmission medium is in an idle state using the network interface 121 of the terminal device 12. If the medium is in an idle state, the terminal device 12 transmits the registration request message for starting registration processing to the master device 11.

In the manner as described above, the terminal device 12 detects whether there is another terminal device that is to be newly connected in the environment.

In other words, the terminal device 12 transmits a check message for detecting whether or not the terminal device 14 that is another terminal apparatus exists in the environment, and detects the terminal device 14 by receiving, from the terminal device 14, the response message indicating that the terminal device 14 has received the check message. Here, the check message includes information on a waiting time for causing the term inal device 14 to wait to transmit the registration request message. When the check message is received, the terminal device 14 transmits a registration request message to the master device 11 or the master device 13 after the waiting time elapses.

It should be noted that a method for the terminal device 12 to detect whether there is another terminal device that is to be newly connected in the environment is not limited to the above example.

For example, the terminal device 12 may set a timer (time limit) in the device itself, and wait for the check message broadcast from the terminal device 14 that is another new terminal device. Specifically, the terminal device 14 may enter the home network 2, and start transmitting the broadcast check message corresponding to a beacon request message for detecting a master device in which the device may be registered as a new control target term inal, before the timer (time limit) of the terminal device 12 expires. In that case, the terminal device 12 detects the terminal device 14 by receiving the check message transmitted from the terminal device 14. Then, the terminal device 12 detects that the terminal device 14 is in the environment, and thereafter waits a time period obtained by adding a random time to a time necessary until the registration request message is acknowledged. After that, the terminal device 12 checks whether the transmission medium of the home network 1 is in an idle state using the network interface 121. If it is in an idle state, the terminal device 12 transmits, to the master device 11, the registration request message indicating a request for registration as a new control target terminal.

In other words, the terminal device 12 detects the terminal device 14 by receiving the check message used by the terminal device 14 that is another terminal apparatus to detect whether or not the terminal device 12 exists on the home network 2. Here, this check message includes information on a waiting time for causing the terminal device 12 to wait to transmit a registration request message. When the above check message is received, the terminal device 12 transmits the registration request message to the master device 11 again after the waiting time elapses.

Further, a case is also possible where the terminal device 12 does not detect the terminal device 14 that is another new terminal device before transmitting the registration request message to the master device 1 1 , and thus even if the terminal device 12 transmits the registration request message to the master device 11, the terminal device 12 and the terminal device 14 may start transmitting the registration request message at the same time. In that case, or specifically, in the case where the terminal device 12 and the terminal device 14 start transmitting the registration request message at the same time, and collision of the registration request messages occurs, both the terminal device 12 and the terminal device 14 immediately back off.

In other words, when the terminal device 12 detects that the registration request message has been transmitted from the terminal device 14, the terminal device 12 transmits the registration request message for requesting registration of the terminal device 12 to the master device 11 after a random time elapses.

In this manner, a plurality of registration processes are sequentially performed, rather than at the same time. Specifically, the terminal device 12 and the terminal device 14 ensure in S115 that only one of the terminal devices 12 and 14 will be a new terminal device that can start processing for registration thereof in the master device 11 or the master device 13 at one time.

Accordingly, registration requests are sequentially transmitted from the terminal devices to the master devices 11 and 13, and thus it can be determined whether or not the registration requests transmitted from the terminal devices to the master devices 11 and 13 are each transmitted to a control apparatus in which the device is to be registered. As a result, it is possible to reliably prevent each terminal device from being registered in a master device in which the terminal device is not to be registered.

### < Master selection procedure performed by new terminal device>

Next is a detailed description of a master selection procedure performed by the terminal device 12 in S117. Specifically, the following is a detailed description of a procedure for the terminal device 12 to determine an order of master devices to which the terminal device 12 itself may transmit a registration start request message.

First, the terminal device 12 detects that two or more master devices (the master devices 11 and 13) are in the environment, and thereafter randomly sorts the two or more master devices (the master devices 11 and 13).

It should be noted that the terminal device 12 may determine the order of two or more master devices based on a certain policy, algorithm, or configuration preset at a factory. Examples of policies are assumed to include: a policy of determining the order such that a master device is placed earlier which transmitted a beacon whose receiving intensity is higher among the beacons transmitted by the master devices 11 and 13 and received by the terminal device; and a policy of determining the order such that a master device is placed earlier which transmitted a beacon including information indicating that registration is being performed, among the beacons transmitted by the master devices 11 and 13 and received by the terminal device.

In other words, the terminal device 12 further detects whether or not the master device 11 and the master device 13 that is different from the master device 11 exist in the environment. The terminal device 12 transmits, also to the master device 13, a registration request message indicating a request for registration as a new control target terminal. Then, when detecting the existence of the master device 13 in addition to the master device 11, the terminal device 12 determines the order for selecting a master device, and transmits the above registration request message in accordance with the determined order, the order indicating to which of the master devices 11 and 13 a registration request message is to be transmitted earlier.

Further, in the case where there is another master device that enters the home network 1 later, the terminal device 12 may detect that other master device by receiving a broadcast message from the other master device. In that case, the terminal device 12 may determine the order of master devices including the other newly detected master device, as in the case of the existing master device 11.

### < Registration request and registration request acknowledgement message>

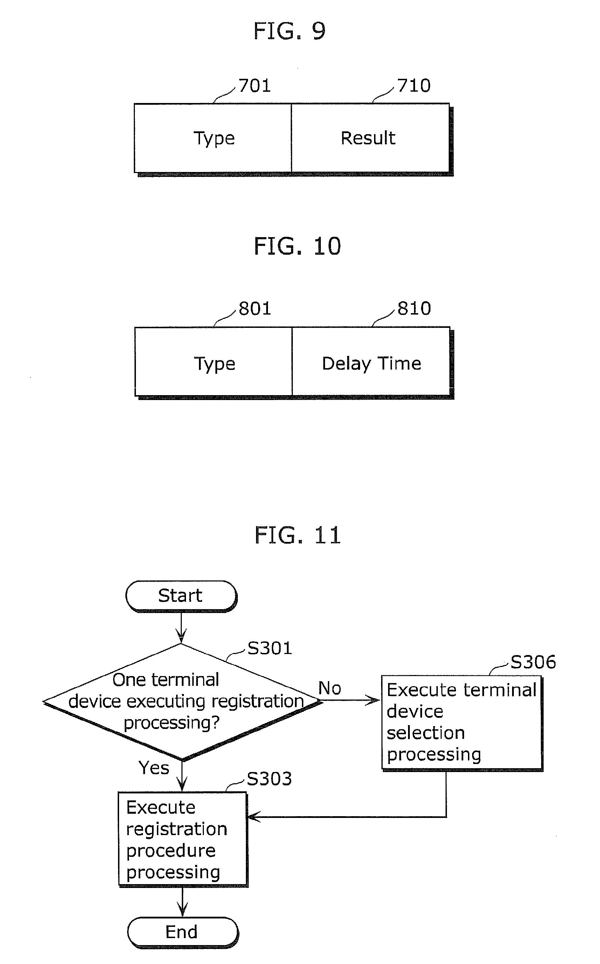

Fig. 8 shows a message format included in a registration request message and a registration request acknowledgement message.

Fig. 8 shows a message format included in a registration request message or a registration request acknowledgement message transmitted and received on a network such as a home network, for example.

Type 601 is a type information element (IE), and is for identifying a message including Type 601 as being a registration request message or a registration request acknowledgement message.

Only in the case of a registration request acknowledgement message, information is stored in Action 610 and Signal Description 620. Action 610 includes information on a method of reproducing a signal such as, for example, causing a visual signal to illuminate or flash, or reproducing an audio signal once or repeatedly. Signal Description 620 includes a signal type such as, for example, "audio", "visual", or both "audio" and "visual", and the filename of the signal.

### < Registration start accept message and registration start reject message>

Fig. 9 shows a message format included in a registration start accept message and a registration start reject message.

Fig. 9 shows a message format included in a registration start accept message and a registration start reject message regarding registration transmitted and received on a network such as a home network, for example.

Type 701 is a type information element (IE), and is for identifying a message including Type 701 as being a registration start accept message or a registration start reject message.

Result 710 includes the result of a user operation, or in other words, information as to whether a user approves or rejects registration processing involved with the terminal device 12 or the master device 11. Accordingly, a message including Type 701 can be identified as being a registration start accept message or a registration start reject message.

### < Registration start delay message>

Fig. 10 shows a message format included in a registration start delay message.

Fig. 10 shows a message format included in a registration start delay message transmitted and received on a network such as a home network, for example.

Type 801 is a type information element (IE), and is for identifying a message including Type 801 as being a registration start delay message.

Delay Time 810 includes information on the length of time for the terminal device 12 to wait to transmit again a registration start request to the same master device. It should be noted that storing 0 in Delay Time 810 may indicate that the terminal device 12 may wait a random time.

Next is a description of the operation of the master device 11.

### < Registration processing performed by master device>

Fig. 11 is a flowchart for describing a processing procedure for the master device 11 to start registration of a new terminal device that joins the home network 1.

First, the master device 11 detects whether or not there is only one terminal device that is to be newly registered as a control target terminal and that is executing registration processing (S301).

When there are a plurality of terminal devices that are executing registration processing (No in S301), the master device 11 executes terminal device selection processing in order to determine the order of terminal devices that are to be registered and for which registration processing is to be executed (S306).

Next, based on the order of terminal devices determined as a result of the terminal device selection processing of S306, the master device 11 executes processing for registering a selected terminal device (for example, the terminal device 12) that is a registration target (S303).

It should be noted that in S301 , when there is only one terminal device (for example, the terminal device 12) that is executing registration processing (Yes in S301), the master device 11 executes processing for registering the terminal device 12 (S303).

As described above, the master device performs a registration start processing procedure.

Then, when the master device 11 performs the above registration start processing procedure, and it is assured that there is only one new terminal device that is executing registration processing in the environment, the master device 11 transmits a registration request acknowledgement message to that new terminal device (e.g., the terminal device 12), and also reproduces a signal indication designated in the registration request acknowledgement message. Further, the master device 11 transmits a registration request acknowledgement message, and meanwhile sets a timer for waiting for a user operation in the master device itself.

Next, the user gives an approval instruction to the master device 11 based on the signal indication reproduced by the terminal device 12 and the master device 11.

Then, the master device 11 transmits a registration start accept message to the terminal device 12.

It should be noted that when the user gives a rejection instruction to the master device 11 or the timer (time limit) of the master device 11 expires, the master device 11 transmits a registration start reject message to the terminal device 12.

### <Terminal device selection processing performed by master device>

The following is a detailed description of registration procedure processing performed by the master device 11 in S303.

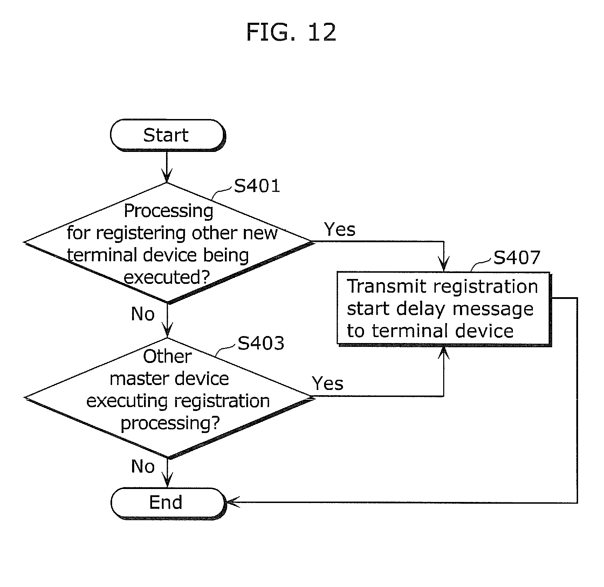

Fig. 12 is a flowchart for describing the details of registration procedure processing performed by the master device.

First, upon receiving a registration request message from the new terminal device (e.g., the terminal device 12) that joins the home network 1, the master device 11 checks whether or not the master device 11 is executing processing for registering another new terminal device (e.g., the terminal device 14) (S401).

When processing for registering the other new terminal device is not being executed (No in S401), the master device 11 detects whether another master device (e.g., the master device 13) is executing processing for newly registering a control target terminal (S403). Specifically, when the master device 11 detects a certain registration message (e.g., a registration request message, a registration request acknowledgement message, or the like) transmitted and received between the other master device 13 and the new terminal device by checking a transmission medium shared by all the master devices (e.g., the master devices 11 and 13), the master device 11 recognizes that the other master device 13 is in the environment.

When the other master device (the master device 13) is not executing registration processing (No in S403), the master device 11 ends the terminal device selection procedure.

It should be noted that when the master device 11 is executing processing for registering the other new terminal device in S401 (Yes in S401), the master device 11 transmits, in response, a registration start delay message to a new terminal device (the terminal device 12) that most recently transmitted the registration request message (S407). Further, when the other master device (the master device 13) is executing registration processing in S403 (Yes in S403), the master device 11 transmits, in response, a registration start delay message to the new terminal device (the terminal device 12) that most recently transmitted the registration request message. Accordingly, all the new terminal devices performing registration processing stop current registration processing, and wait a fixed time, and thereafter, start new registration processing with a master device (the master device 11 or 13).

As described above, the master device 11 performs registration procedure processing.

Thus, the new terminal device (the terminal device 12) backs off by receiving a registration start delay message from the master device 11. Then, as in the description of S205, the terminal device 12 transmits the registration request message again to the master device 11 after the waiting time elapses.

Here, processing of checking in S401 whether the master device 11 is executing processing for registering another new terminal device (e.g., the terminal device 14) will be described in detail.

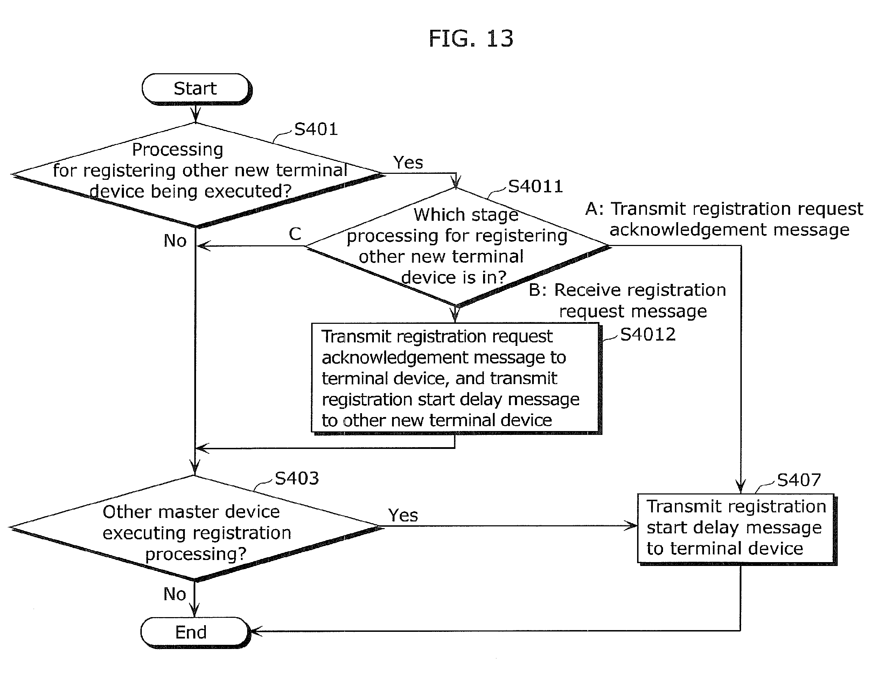

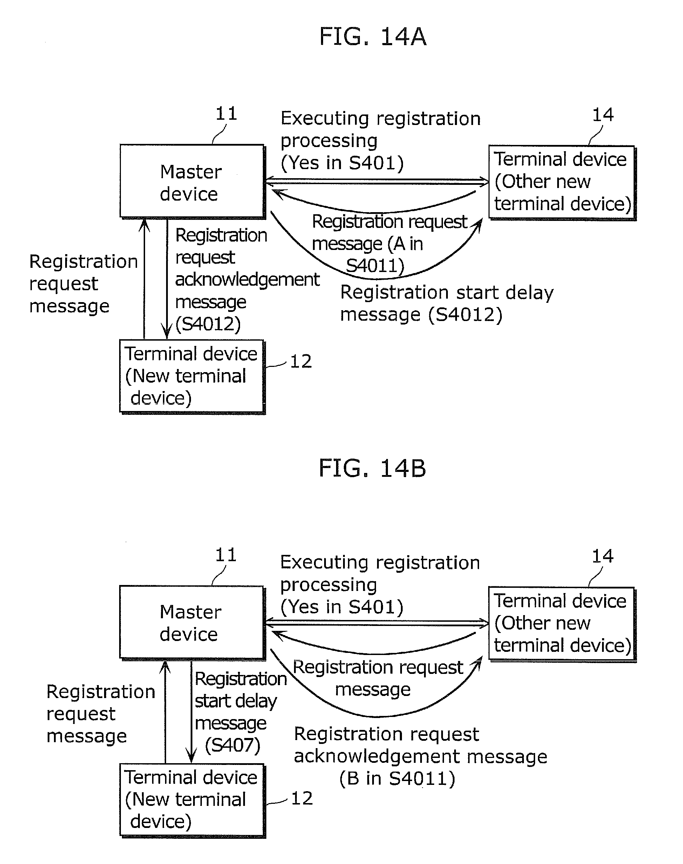

Fig. 13 is a flowchart for describing the details of processing of S401. It should be noted that the same numerals are given to the same elements as those in Fig. 12, and a detailed description thereof is omitted. Further, Figs. 14A and 14B show the relationship among the master device 11, the terminal device 12 that is a new terminal device, and the other new terminal device 14 in the processing of S401.

When the master device 11 is executing processing for registering another new terminal device in S401 (Yes in S401), the master device 11 further checks the stage of processing for registering another new terminal device (S4011).

Specifically, if the master device 11 receives a registration request message from the new terminal device 12 that is to join the home network 1, the master device 11 determines in S401 that processing for registering the new terminal device 12 is being executed. Then, the master device 11 further checks whether the state is a state A: the registration request message is received from the other new terminal device 14 or a state B: the registration request acknowledgement message has already been transmitted to the other new terminal device 14 (S503).

As shown in Fig. 14A, in the case of a state where a registration request message has been received from the other new terminal device 14 (A in S4011), the master device 11 transmits, in response, a registration request acknowledgement message to the new terminal device (the terminal device 12) that most recently transmitted the registration request message (S4012). In contrast, the master device 11 transmits a registration start delay message to the other new terminal device 14, in response.

On the other hand, as shown in Fig. 14B, in the case of a state where the reception request acknowledgement message has already been transmitted to the other new terminal device 14 (B in S4011), the master device 11 transmits, in response, a registration start delay message to the new terminal device that most recently transmitted the registration request message (the terminal device 12) or the other new terminal device (the terminal device 14) (S407). Then, when the user determines that the pair is a proper pair, the master device 11 transmits a registration start accept message to the other new terminal device.

It should be noted that when the processing state is not either A or B in S401 (C in S401), the master device 11 shifts to the processing of S403 (S403).

As described above, according to the present invention, it is possible to realize a terminal apparatus capable of reliably preventing from being registered in a control apparatus in which the terminal apparatus is not to be registered, and a method of registering the same.

For example, according to the terminal apparatus and the method of registering the same of the present invention, when another terminal apparatus is detected prior to transmitting a registration request, the time at which the first registration request is transmitted and the time at which the second registration request is transmitted are controlled so as to prevent overlapping of a period in which the terminal apparatus itself transmits a first registration request and a period in which another term inal apparatus transm its a second registration request.

Accordingly, registration processing is sequentially performed between the first control terminal and the terminal apparatuses, and thus it is possible to prevent registration processing from being executed, at the same time, by the terminal apparatus itself and another terminal apparatus. In this manner, incorrect authentication can be prevented from occurring between the first control apparatus and the term inal apparatus itself.

Further, for example, according to the terminal apparatus and the method of registering the same of the present invention, although the time at which a registration request is transmitted is controlled when the destination of the second registration request is the second control apparatus, when the destination of the second registration request is the first control apparatus, even if the periods in each of which the registration request is transmitted overlap, the overlapping of registration processing is allowed.

Accordingly, when the terminal apparatus and another terminal apparatus transmit a registration request to different transmission destinations, the registration requests therefrom are sequentially transmitted, and thus it is possible to prevent the other communication apparatus, the first control apparatus, and the second control apparatus from notifying the users of completion information at the same time. As a result, it is possible to reliably prevent each terminal apparatus from being registered in a control apparatus in which the terminal apparatus is not to be registered.

It should be noted that when there are a plurality of new terminal devices serving as new terminals to be controlled by a master device, and the devices are in an interference range, those new terminal devices may adjust the registration order thereof. Further, when the devices are not in the interference range, the master device controls the registration order of the new terminal devices.

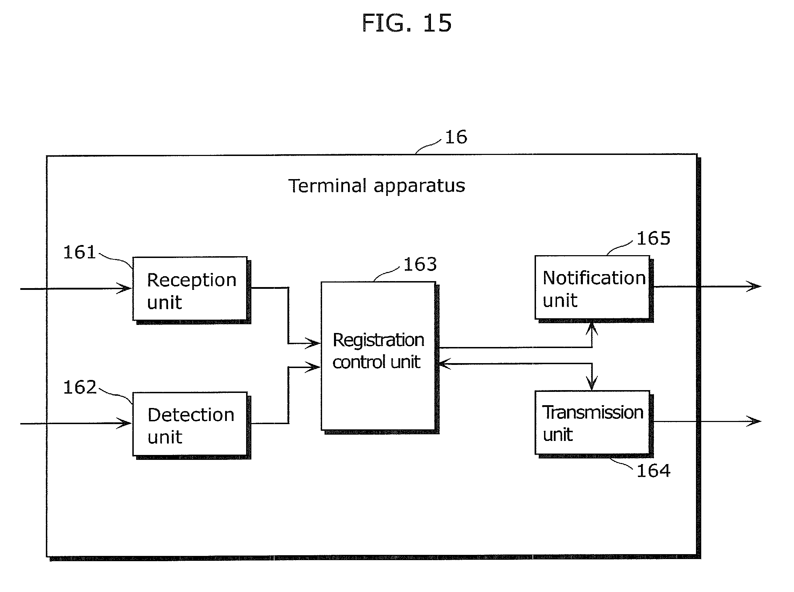

It should be noted that although the above is a description assuming that the terminal device 12 that is an example of the present invention includes the network interface 121, the registration control unit 122, the audio/visual indication unit 123, the user interface unit 124, the terminal device selection unit 125, and the master device selection unit 126, the present invention is not limited to this. As with a terminal apparatus 16 shown in Fig. 15, the terminal apparatus may be a terminal apparatus that is to be registered, as a new control target terminal, in a first control apparatus that controls a control target terminal via a communication network, and include a reception unit 161 , a detection unit 162, a registration control unit 163, a notification unit 165, and a transmission unit 164. Here, Fig. 15 shows functional blocks of the minimum configuration of the terminal apparatus according to the present invention. Further, the terminal apparatus 16 corresponds to the terminal device 12 in the present embodiment. The first control apparatus corresponds to the master device 11 in the present embodiment. Further, the reception unit 161, the detection unit 162, the registration control unit 163, the notification unit 165, and the transmission unit 164 are examples of the registration control unit 122 shown in Fig. 4, and are constituent elements included in the registration control unit 122.

The transmission unit 164 transmits, to the first control apparatus, a first registration request message that indicates a request for registration as a new control target terminal.

The reception unit 161 receives a registration request acknowledgement message transmitted from the first control apparatus in response to the reception of the first registration request message.

The notification unit 165 notifies the outside of the terminal apparatus of notification information included in the registration request acknowledgement message and indicating that the first control apparatus has received the first registration request message.

The detection unit 162 detects another terminal apparatus that is to transmit a second registration request message indicating a request for registration as a new control target term inal, to the first control apparatus or a second control apparatus that is different from the first control apparatus.

Here, the second control apparatus corresponds to the master device 13 in the present embodiment, and another terminal apparatus corresponds to the terminal device 14 in the present embodiment.

When the detection unit 162 detects another terminal apparatus before the transmission unit 164 transmits the registration request message to the first control apparatus, the registration control unit 163 controls at least the time at which the first registration request message is transmitted so as to prevent overlapping of the period in which the first registration request message is transmitted and the period in which the second registration request message is transmitted.

As described above, the terminal apparatus including the characteristic constituent elements of the present embodiment is constituted.

Although the above is a description of the terminal apparatus according to the present invention based on a plurality of embodiments, the present invention is not limited to those embodiments. The present invention also includes forms obtained by performing modification that may be conceived by those skilled in the art on the embodiments and other forms realized by arbitrarily combining the constituent elements in the embodiments.

Further, the present invention can be realized not only as a terminal apparatus, but also as a method using processing means that constitute the terminal apparatus as steps. For example, those steps are executed by a computer. In addition, the present invention can be realized as a program for causing a computer to execute the steps included in the method. Furthermore, the present invention can be realized as a computer-readable recording medium such as a CD-ROM on which the program is recorded. Further, the communication terminal described in the embodiments may be a com puter.

Further, the constituent elements included in the terminal apparatus may be realized as a large scale integration (LSI) that is an integrated circuit. These constituent elements may be each formed as a single chip or may be formed as a single chip to include some or all of the elements. Although an LSI is described here, the integrated circuit can also be called an integrated circuit (IC), a system LSI, a super LSI, or an ultra LSI, depending on the difference in the degree of integration.

Furthermore, the method of circuit integration is not limited to LSIs, and implementation through a dedicated circuit or a general-purpose processor is also possible. A field programmable gate array (FPGA) that allows programming or a reconfigurable processor that allows reconfiguration of the connections and settings of the circuit cells inside the LSI may also be used.

In addition, depending on the emergence of circuit integration technology that replaces LSI due to progress in semiconductor technology or other derivative technology, it is obvious that such technology may be used to perform circuit integration of the constituent elements included in the communication terminal.

### [Industrial Applicability]

A terminal apparatus according to the present invention is applicable to various communication terminals that execute communication in a network, and is particularly useful to home electric appliances such as televisions, air-conditioners, and home security devices connected to a home network.

### [Reference Signs List]

- 1, 2, 901, 901A, 901B, 902: Home network
- 11, 13, 911 , 913: Master device
- 12, 14, 912, 914: Terminal device
- 16: Terminal apparatus
- 111, 121: Network interface
- 112, 122, 163: Registration control unit
- 113, 123: Audio/visual indication unit
- 114, 124: User interface unit
- 115, 125: Terminal device selection unit
- 126: Master device selection unit
- 161: Reception unit
- 162: Detection unit
- 164: Transmission unit
- 165: Notification unit
- 601, 701, 801: Type
- 610: Action
- 620: Signal description
- 71 0: Result
- 810: Delay time
- 903: House
- 904: Neighboring house
- 1171, 1172, 1174, 1175, 1271 , 1274, 1275: Path

## Claims

1. A terminal apparatus that is to be registered, as a new control target terminal, in a first control apparatus that controls a control target terminal via a communication network, said terminal apparatus comprising:
a transmission unit configured to transmit, to the first control apparatus, a first registration request that indicates a request for registration as a new control target terminal;
a reception unit configured to receive registration request acknowledgement information transmitted from the first control apparatus in response to reception of the first registration request;
a notification unit configured to notify outside of said terminal apparatus of notification information that is included in the registration request acknowledgement information and that indicates that the first control apparatus has received the first registration request;
a detection unit configured to detect another terminal apparatus that is to transmit, to at least a second control apparatus that is different from the first control apparatus, a second registration request that indicates a request for registration as a new control target terminal; and
a registration control unit configured to control, when said detection unit detects the other terminal apparatus before said transmission unit transmits the registration request to the first control apparatus, at least one of a time at which the first registration request is transmitted and a time at which the second registration request is transmitted so as to prevent overlapping of a period in which the first registration request is transmitted and a period in which the second registration request is transmitted.

2. The terminal apparatus according to Claim 1,
wherein when a destination of the second registration request is the first control apparatus, said registration control unit is configured to allow the overlapping of the period in which the second registration request is transmitted and the period in which the first registration request is transmitted, and control one of the time at which the first registration request is transmitted and the time at which the second registration request is transmitted.

3. The terminal apparatus according to Claim 1,
wherein when said detection unit detects the other terminal apparatus, said registration control unit is configured to determine a registration processing order in relation to the other terminal apparatus, and cause transmission of the first registration request to the first control apparatus in accordance with the determined registration processing order, the registration processing order indicating which of the time at which the first registration request is transmitted and the time at which the second registration request is transmitted comes earlier.

4. The terminal apparatus according to any one of Claims 1 to 3,
wherein after transmitting a check message for detecting whether or not the other terminal apparatus exists on the communication network, said detection unit is configured to detect the other terminal apparatus by receiving, from the other terminal apparatus, a response message indicating that the other terminal apparatus has received the check message.

5. The terminal apparatus according to Claim 4,
wherein the check message includes information on a waiting time for causing the other terminal apparatus to wait to transmit the second registration request, and
when receiving the check message, the other terminal apparatus transmits the second registration request to one of the first control apparatus and the second control apparatus after the waiting time elapses.

6. The terminal apparatus according to any one of Claims 1 to 3,
wherein said detection unit is configured to detect the other terminal apparatus by receiving a check message for the other terminal apparatus detecting whether or not said terminal apparatus exists on the communication network.

7. The terminal apparatus according to Claim 6,
wherein the check message includes information on a waiting time for causing said terminal apparatus to wait to transmit the first registration request, and
when said detection unit receives the check message, said registration control unit is configured to cause said transmission unit to transmit the first registration request after the waiting time elapses.

8. The terminal apparatus according to Claim 1,
wherein when said detection unit detects that the second registration request has been transmitted from the other terminal apparatus, said registration control unit is configured to cause said transmission unit to transmit the first registration request to the first control apparatus after a random time elapses.

9. The terminal apparatus according to any one of Claims 1 to 8,
wherein said detection unit is further configured to detect whether or not the second control apparatus that is different from the first control apparatus exists on the communication network,
said transmission unit is configured to transmit, also to the second control apparatus, the first registration request that indicates the request for registration as a new control target terminal, and
said registration control unit is configured to determine, when said detection unit detects that the second control apparatus exists, a control apparatus order that indicates to which of the first control apparatus and the second control apparatus the first registration request is transmitted earlier, and cause said transmission unit to transmit the first registration request in accordance with the determined control apparatus order.

10. The terminal apparatus according to Claim 9,
wherein when said terminal apparatus is registered in one of the first control apparatus and the second control apparatus, said registration control unit is configured to stop transmitting the first registration request to the other one of the first and second control apparatuses.

11. A control apparatus that controls a control target terminal via a communication network, said control apparatus comprising:
a reception unit configured to receive, from a terminal apparatus, a first registration request that indicates a request for registration as a new control target terminal;
a transmission unit configured to transmit, to the terminal apparatus, registration request acknowledgement information that includes notification information indicating that said control apparatus has received the first registration request, in response to the reception of the first registration request;
a detection unit configured to detect another terminal apparatus that is different from the term inal apparatus and that is to transmit, to at least another control apparatus different from said control apparatus, a second registration request that indicates a request for registration as a new control target terminal; and
a registration control unit configured to control at least a time at which the first registration request is transmitted so as to prevent overlapping of a period in which the first registration request is transmitted and a period in which the second registration request is transmitted, when said detection unit detects the terminal apparatus and the other terminal apparatus.

12. A method of registering a terminal apparatus, as a new control target terminal, in a first control apparatus that controls a control target terminal via a communication network, said method comprising:
transmitting, to the first control apparatus, a first registration request that indicates a request for registration as a new control target term inal;
receiving registration request acknowledgement information transmitted from the first control apparatus in response to reception of the first registration request;
notifying outside of the terminal apparatus of notification information that is included in the registration request acknowledgement information and that indicates that the first control apparatus has received the first registration request;
detecting another terminal apparatus that is to transmit, to one of the first control apparatus and a second control apparatus that is different from the first control apparatus, a second registration request that indicates a request for registration as a new control target terminal; and
controlling, when the other terminal apparatus is detected in said detecting before the registration request is transmitted to the first control apparatus in said transmitting, at least one of a time at which the first registration request is transmitted and a time at which the second registration request is transmitted so as to prevent overlapping of a period in which the first registration request is transmitted and a period in which the second registration request is transmitted.

13. A program for causing a terminal apparatus to execute a method of registering the terminal apparatus, as a new control target term inal, in a first control apparatus that controls a control target terminal via a communication network, said program causing the terminal apparatus to execute:
transmitting, to the first control apparatus, a first registration request that indicates a request for registration as a new control target term inal;
receiving registration request acknowledgement information transmitted from the first control apparatus in response to reception of the first registration request;
notifying outside of the terminal apparatus of notification information that is included in the registration request acknowledgement information and that indicates that the first control apparatus has received the first registration request;
detecting another terminal apparatus that is to transmit, to one of the first control apparatus and a second control apparatus that is different from the first control apparatus, a second registration request that indicates a request for registration as a new control target terminal; and
controlling, when the other terminal apparatus is detected in the detecting before the registration request is transmitted to the first control apparatus in the transmitting, at least one of a time at which the first registration request is transmitted and a time at which the second registration request is transmitted so as to prevent overlapping of a period in which the first registration request is transmitted and a period in which the second registration request is transmitted.

14. A system comprising:
a first control apparatus that controls a control target terminal via a communication network; and
a terminal apparatus that is to be registered, as a new control target term inal, in said first control apparatus,
wherein said terminal apparatus includes:
a transmission unit configured to transmit, to said first control apparatus, a first registration request that indicates a request for registration as a new control target terminal;
a reception unit configured to receive registration acknowledgement information transmitted from said first control apparatus in response to reception of the first registration request;
a notification unit configured to notify outside of said terminal apparatus of notification information that is included in the registration acknowledgement information and that indicates that said first control apparatus has received the first registration request;
a detection unit configured to detect another terminal apparatus that is to transmit, to one of said first control apparatus and a second control apparatus that is different from said first control apparatus, a second registration request that indicates a request for registration as a new control target terminal; and
a registration control unit configured to control, when said detection unit detects the other terminal apparatus before said transmission unit transmits the registration request to said first control apparatus, at least one of a time at which the first registration request is transmitted and a time at which the second registration request is transmitted so as to prevent overlapping of a period in which the first registration request is transmitted and a period in which the second registration request is transmitted.

15. An integrated circuit of a terminal apparatus that is to be registered, as a new control target terminal, in a first control apparatus that controls a control target terminal via a communication network, said integrated circuit comprising:
a transmission unit configured to transmit, to the first control apparatus, a first registration request that indicates a request for registration as a new control target terminal;
a reception unit configured to receive registration acknowledgement information transmitted from the first control apparatus in response to reception of the first registration request;
a notification unit configured to notify outside of the terminal apparatus of notification information that is included in the registration acknowledgement information and that indicates that the first control apparatus has received the first registration request;
a detection unit configured to detect another terminal apparatus that is to transm it, to one of the first control apparatus and a second control apparatus that is different from the first control apparatus, a second registration request that indicates a request for registration as a new control target terminal; and
a registration control unit configured to control, when said detection unit detects the other terminal apparatus before said transmission unit transmits the registration request to the first control apparatus, at least one of a time at which the first registration request is transmitted and a time at which the second registration request is transmitted so as to prevent overlapping of a period in which the first registration request is transmitted and a period in which the second registration request is transmitted.
